# FASCICULE DE BREVET EUROPEEN

(11) **EP 3 131 857 B1**
(45) Date de publication et mention de la délivrance du brevet: **25.12.2019**
(21) Numéro de dépôt: 15720381.1
(22) Date de dépôt: 14.04.2015
(51) Int. Cl.: C03C 25/32, C03C 25/321, C03C 25/25, C08J 5/04, C08J 5/24, C09J 103/02, D06M 13/165, D06M 13/207

(54) **COMPOSITION D'ENCOLLAGE A BASE DE SACCHARIDE NON REDUCTEUR ET DE SACCHARIDE HYDROGENE, ET SON UTILISATION POUR LA FABRICATION DES PRODUITS ISOLANTS**
BINDEMITTELZUSAMMENSETZUNG AUF BASIS VON NICHTREDUZIERENDEM SACCHARID UND HYDRIERTEM SACCHARID UND IHRE VERWENDUNG ZUR HERSTELLUNG VON ISOLIERPRODUKTEN
BINDER COMPOSITION BASED ON NON-REDUCING SACCHARIDE AND HYDROGENATED SACCHARIDE, AND ITS USE FOR PRODUCING INSULATING PRODUCTS

(30) Priorité: 15.04.2014 FR 1453350
(43) Date de publication de la demande: 22.02.2017
(73) Titulaire: Saint-Gobain Isover, 92400 Courbevoie (FR)
(72) Inventeur: OBERT, Edouard, 60700 Fleurines (FR); KIEFER, Lionel, 75010 Paris (FR); KAPLAN, Benjamin, 52066 Aachen (DE)
(74) Mandataire: Saint-Gobain Recherche
(86) Numéro de dépôt international: PCT/FR2015/050994
(87) Numéro de publication internationale: WO 2015/159012

(56) Documents cités:
- WO-A1-2008/053332
- WO-A1-2013/021112
- WO-A2-2009/080938
- WO-A2-2011/015946
- CN-A- 103 110 039
- FR-A- 1 066 176

## Description

La présente invention se rapporte au domaine des encollages pour produits composites ou revêtus, tels que des produits d'isolation thermique et/ou acoustique à base de laine minérale, notamment de verre ou de roche, et d'un liant organique exempt de formaldéhyde.

L'invention concerne plus particulièrement une composition d'encollage apte à réticuler pour former ledit liant organique, qui renferme un saccharide non réducteur, un saccharide hydrogéné et un acide organique polycarboxylique.

L'invention a également pour objet les produits isolants constitués de laine minérale encollée au moyen de la composition d'encollage précitée.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, quant à elle, à déverser la matière en fusion à la surface périphérique externe d'organes rotatifs appelés rotors, d'où la matière en fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Les résols les plus usuels sont obtenus par condensation de phénol et de formaldéhyde, en présence d'un catalyseur basique. Au final, ces résols contiennent une certaine proportion de monomères n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un d'acide carboxylique et d'un alcool.

Dans US 5 340 868, l'encollage comprend un polymère polycarboxylique, un β-hydroxylamide et un acide carboxylique monomérique au moins trifonctionnel.

Il a aussi été décrit des compositions d'encollage comprenant une alcanolamine renfermant au moins deux groupements hydroxyle et un polymère polycarboxylique (US 6 071 994, US 6 099 773, US 6 146 746) qui peuvent être associés à un copolymère (US 6 299 936).

Il a aussi été proposé des compositions d'encollage comprenant un polymère polycarboxylique et un polyol (US 2002/0091185, US 2002/0091185). Ces compositions peuvent contenir en outre un catalyseur qui peut être un composé contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689), ou un tensioactif cationique, amphotère ou non ionique (US 2002/0188055), ou encore un agent de couplage de type silane (US 2004/0002567).

Dans WO 2006/120523, il est décrit une composition d'encollage qui comprend (a) un poly(alcool vinylique), (b) un agent de réticulation multifonctionnel choisi parmi les polyacides non polymériques ou leurs sels, les anhydrides ou un polyaldéhyde non polymérique et (c) éventuellement un catalyseur, le rapport pondéral (a)/(b) variant de 95:5 à 35:65 et le pH étant au moins égal à 1,25.

On connaît également de WO 2008/053332 une composition d'encollage qui comprend un adduit (a) d'un polymère de sucre et (b) d'un agent de réticulation multifonctionnel choisi parmi les polyacides monomériques ou leurs sels, et les anhydrides, qui est obtenu dans des conditions telles que le rapport pondéral (a)/(b) varie de 95:5 à 35:65.

Par ailleurs, il a été décrit des compositions d'encollage dont tout ou partie de l'alcool est remplacé par un ou plusieurs saccharides.

Dans US 2005/0215153, la composition d'encollage est formée à partir d'un pré-liant contenant un polymère d'acide carboxylique et d'un polyol, et d'une dextrine en tant que co-liant.

Dans US 5 895 804, la composition d'encollage comprend un polymère polycarboxylique de poids moléculaire au moins égal à 1000 et un polysaccharide de poids moléculaire au moins égal à 10000.

Dans WO 2009/080938, la composition d'encollage comprend au moins un acide organique polycarboxylique de masse molaire inférieure ou égale à 1000 et au moins un monosaccharide et/ou polysaccharide.

Dans WO 2011/015946, la composition d'encollage comprend de la mélasse, un acide polycarboxylique polymérique et un acide polycarboxylique monomérique, éventuellement un catalyseur tel que l'hypophosphite de sodium.

On connaît de WO 2010/029266 et WO 2013/014399 une composition d'encollage qui comprend au moins un sucre hydrogéné et un agent de réticulation polyfonctionnel.

Enfin, dans WO 2013/021112, la composition d'encollage comprend au moins un saccharide réducteur, un saccharide hydrogéné et un agent de réticulation polyfonctionnel.

Il a été constaté que les produits d'isolations à base de laine minérale fabriqués avec les compositions d'encollage précitées présentent une résistance au vieillissement en milieu humide insuffisante pour permettre leur utilisation à l'extérieur des bâtiments.

La présente invention a pour but de proposer une composition d'encollage aqueuse à base de saccharides qui confère à des produits composites ou revêtus, notamment aux produits d'isolation à base de laine minérale, une résistance hydrolytique améliorée tout en conservant de bonnes propriétés mécaniques.

Plus précisément, la composition d'encollage aqueuse conforme à l'invention se caractérise en ce qu'elle comprend
- au moins un saccharide non réducteur choisi parmi le tréhalose et le saccharose,
- au moins un saccharide hydrogéné choisi parmi l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon et représentant de 40 à 80 % du poids total de(s) saccharide(s) non réducteur(s) et de(s) saccharide(s) hydrogéné(s),
- au moins un acide organique polycarboxylique qui est l'acide citrique, et
- au moins 1 % et jusqu'à 20 % en poids, rapporté au poids total du ou des sucres non réducteurs, du ou des sucres hydrogénés et de l'acide organique polycarboxylique, d'un catalyseur choisi parmi l'hypophosphite de sodium, le phosphite de sodium et les mélanges de ces composés,
le(s) saccharide(s) non réducteur(s) et le(s) saccharide(s) hydrogéné(s) représente(nt) représentent de 10 à 90 % du poids du mélange constitué par le(s) saccharide(s) non réducteur(s), le(s) saccharide(s) hydrogéné(s) et l'acide organique polycarboxylique.

L'expression « saccharide non réducteur » doit être entendue au sens conventionnel, à savoir qu'elle désigne un saccharide constitué de plusieurs motifs saccharidiques dont le carbone 1 porteur du groupe OH hémiacétalique est engagé dans une liaison. Un saccharide non réducteur au sens de l'invention ne présente aucune action réductrice sur les solutions cupro-alcalines.

Le saccharide non réducteur conforme à la présente invention est un oligoholoside non réducteur renfermant au plus 10 motifs saccharidiques.

Parmi les saccharides non réducteurs, on peut citer les diholosides tels que le tréhalose, les isotréhaloses, le saccharose, et les isosaccharoses (« isosucroses » en anglais); les triholosides tels que le mélézitose, le gentianose, le raffinose, l'erlose et l'umbelliférose; les tétraholosides tels que le stachyose; et les pentaholosides tels que le verbascose.

Le saccharide non réducteur selon l'invention est choisi parmi le saccharose et le tréhalose. On préfère le saccharose.

Par « saccharide hydrogéné », on entend l'ensemble des produits résultant de la réduction, de quelque manière que ce soit, d'un saccharide choisi parmi les monosaccharides, les oligosaccharides, les polysaccharides linéaires, ramifiés ou cycliques, et les mélanges de ces produits, notamment les hydrolysats d'amidon.

L'hydrogénation du saccharide peut être effectuée par les méthodes connues opérant dans des conditions de pression d'hydrogène et de température élevées, en présence d'un catalyseur choisi dans les groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le saccharide ou le mélange de saccharides (par exemple un hydrolysat d'amidon) en polyols correspondants.

Bien que n'étant pas préférée, l'hydrogénation peut être mise en œuvre en l'absence de catalyseur d'hydrogénation, en présence d'une source d'hydrogène autre que le gaz hydrogène, par exemple un borohydrure de métal alcalin tel que le borohydrure de sodium.

Le saccharide hydrogéné selon l'invention est choisi parmi l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, notamment commercialisés par la société TEREOS SYRAL sous la dénomination Maltilite®. De préférence, on utilise un sirop de maltitol.

Le saccharide hydrogéné conforme à l'invention possède une masse molaire moyenne en nombre inférieure à 100000, de préférence inférieure à 50000, avantageusement inférieure à 5000, plus particulièrement inférieure à 1000, et mieux encore supérieure à 100.

Dans la composition d'encollage, le(s) saccharide(s) hydrogéné(s) représente(nt) de 40 à 80 % du poids total de(s) saccharide(s) non réducteur(s) et de(s) saccharide(s) hydrogéné(s), avantageusement de 40 à 60 %.

L'acide organique polycarboxylique conforme à l'invention est apte à réagir avec les groupes hydroxyles du saccharide non réducteur et du saccharide hydrogéné sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale. Les inventeurs pensent que des réactions de déshydratation se produisent aussi sur le saccharide non réducteur, induisant la formation de polymères furaniques qui s'intègrent dans le réseau du liant et contribuent de cette manière à améliorer sa résistance hydrolytique.

L'acide organique polycarboxylique selon l'invention est l'acide citrique.

Dans la composition d'encollage, le(s) saccharide(s) non réducteur(s) et le(s) saccharide(s) hydrogéné(s) représente(nt) 10 à 90 % du poids du mélange constitué par le(s) saccharide(s) non réducteur(s), le(s) saccharide(s) hydrogéné(s) et l'acide organique polycarboxylique, de préférence 20 à 85 %, avantageusement 30 à 80 %, mieux encore 40 à 65 % et de manière particulièrement avantageuse 45 à 65 %.

De manière générale, la composition d'encollage selon l'invention ne contient pas de monoalkylamine, dialkylamine et d'alcanolamine. Il n'est en effet pas souhaité que ces composés (qui sont aptes à réagir avec les autres constituants de la composition d'encollage) soient incorporés dans le réseau polymérique du liant final.

La composition d'encollage comprend un catalyseur, acide ou basique, qui a notamment pour fonction d'ajuster la température de début de réticulation.

Le catalyseur est choisi parmi l'hypophosphite de sodium, le phosphite de sodium et les mélanges de ces composés.

La quantité de catalyseur introduite dans la composition d'encollage représente au moins 1% et jusqu'à 20 % du poids total du(des) saccharide(s) non réducteur(s), du(des) saccharide(s) hydrogéné(s) et d'acide organique polycarboxylique, de préférence jusqu'à 10 %.

Les compositions d'encollage particulièrement préférées contiennent du saccharose, du maltitol et de l'acide citrique, et l'hypophosphite de sodium.

La composition d'encollage conforme à l'invention peut comprendre en outre les additifs conventionnels ci-après dans les proportions suivantes calculées sur la base de 100 parts en poids de saccharide(s) non réducteur(s), de saccharide(s) hydrogéné(s) et d'acide organique polycarboxylique :
- 0 à 2 parts de silane, en particulier un aminosilane ou un epoxysilane,
- 0 à 40 parts d'huile, de préférence 0 à 30 parts, notamment 4 à 24 parts,
- 0 à 30 parts d'urée, de préférence 0 à 20 parts, et avantageusement 0 part,
- 0 à 5 parts d'un silicone,
- 0 à 20 parts d'un polyol différent des saccharides précités,
- 0 à 15 parts de sulfate métallique ou d'ammonium, de préférence 0 à 10 parts et avantageusement 0 à 5 parts,
- 0 à 30 parts d'un « extendeur » choisi parmi les dérivés de la lignine tel que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée et le polyol jouent le rôle de plastifiants et permettent d'éviter la prégélification de la composition d'encollage ; le silicone est un agent hydrophobe qui a pour fonction de réduire l'absorption d'eau par le produit d'isolation ; le sulfate métallique ou d'ammonium permet d'améliorer les propriétés mécaniques du produit final, notamment la résistance à la traction après vieillissement; l'« extendeur » est une charge organique soluble ou dispersable dans la composition d'encollage aqueuse qui permet notamment de diminuer son coût.

Le polyol ajouté en tant qu'additif est nécessairement différent du saccharide non réducteur et du saccharide hydrogéné. Ce polyol peut être notamment le glycérol, un glycol tel que l'éthylène glycol, le propylène glycol, le butylène glycol et les poly(alkylène) glycols à base de ces glycols, ou les homopolymères et copolymères d'alcool vinylique.

Le sulfate métallique ajouté en tant qu'additif est un sulfate d'un métal alcalin ou alcalino-terreux, d'un métal de transition ou d'un métal pauvre, de préférence un sulfate de sodium, de magnésium, de fer, de cobalt, de nickel, de cuivre, de zinc ou d'aluminium, et avantageusement de cuivre, de fer^{II} ou d'aluminium. A titre d'exemple de sulfate d'ammonium, on peut citer l'hydrogénosulfate d'ammonium NH₄HSO₄ et le sulfate d'ammonium (NH₄)₂SO₄.

La composition d'encollage présente un pH acide, de l'ordre de 1 à 5 selon le type d'acide organique polycarboxylique utilisé, de préférence supérieur ou égal à 1,0. Avantageusement, le pH est maintenu à une valeur au moins égale à 1,5 de manière à limiter les problèmes d'instabilité de la composition d'encollage et de corrosion de la ligne de fabrication, grâce à l'ajout d'un composé aminé qui n'est pas apte à réagir avec le saccharide non réducteur et le saccharide hydrogéné, par exemple une amine tertiaire, notamment la triéthanolamine. La quantité de composé aminé peut représenter jusqu'à 30 parts en poids du poids total de(s) saccharide(s) non réducteur(s) et de(s) saccharide(s) hydrogéné(s) et d' acide organique polycarboxylique

La composition d'encollage est destinée notamment à être appliquée sur des fibres minérales, en particulier des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°C, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure :
- la résistance à la traction selon la norme ASTM C 686-71T sur un échantillon découpé par estampage dans le produit d'isolation. L'échantillon a la forme d'un tore de 122 mm de longueur, 46 mm de largeur, un rayon de courbure de la découpe du bord extérieur égal à 38 mm et un rayon de courbure de la découpe du bord inférieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance à la traction RT définie par le rapport de la force de rupture F à la masse de l'échantillon.

La résistance à la traction est mesurée après la fabrication (résistance à la traction initiale notée RTfab) et après un vieillissement accéléré dans un autoclave à une température de 105°C sous 100 % d'humidité relative pendant 15 minutes (RT15).
- l'épaisseur initiale du produit d'isolation et l'épaisseur après avoir placé le produit dans une enceinte chauffée à 70°C sous 95 % d'humidité relative pendant 72 heures.

### EXEMPLES 1 ET 2

On prépare des compositions d'encollage comprenant les constituants figurant dans le tableau 1 dans des proportions exprimées en parts pondérales.

Les compositions d'encollage sont préparées par simple mélange des constituants dans de l'eau, sous agitation vigoureuse jusqu'à dissolution ou dispersion complète des constituants.

A titre de référence, on prépare une première composition d'encollage conforme à la demande WO 2013/021112 (Référence 1) et une deuxième composition d'encollage qui contient 67 parts en poids d'une résine préparée conformément à la demande WO 2008/043960, 20 parts en poids d'urée et les additifs mentionnés dans le tableau 1 (Référence 2).

Les compositions d'encollage sont utilisées pour fabriquer des produits d'isolation à base de laine de verre sur une ligne industrielle.

La laine minérale est produite en continu sur une ligne de 2,4 m de large par la technique de centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous la forme d'un feutre ou d'une nappe à la surface du convoyeur. Le convoyeur passe ensuite en continu dans une étuve à 270°C où les constituants de l'encollage polymérisent pour former un liant.

Le produit d'isolation obtenu à la sortie de l'étuve présente une densité nominale égale à 17,5 kg/m³ et une épaisseur nominale égale à 75 mm.

Les propriétés des produits d'isolation figurant dans le tableau 1 sont évaluées comparativement à des produits utilisant les compositions d'encollage de référence (Références 1 et 2).

La présence de sucre non réducteur dans les exemples 1 et 2 selon l'invention permet de limiter le regonflement par rapport à la Référence 1.

L'ajout de sulfate d'ammonium (Exemple 2) améliore la résistance à la traction après vieillissement par rapport aux Références 1 et 2.

**Tableau 1**

| | Ex. 1 | Ex. 2 | Référence 1 | Référence 2 |
|---|---|---|---|---|
| **Composition** | | | | |
| Saccharide réducteur⁽¹⁾ | - | - | 31,0 | - |
| Saccharose⁽²⁾ | 24,0 | 24,0 | - | - |
| Saccharide hydrogéné⁽³⁾ | 24,0 | 24,0 | 24,0 | - |
| Acide citrique | 52,0 | 52,0 | 45,0 | - |
| Hypophosphite de sodium | 5,0 | 5,0 | 5,0 | - |
| Huile minérale⁽⁴⁾ | 8,0 | 8,0 | 8,0 | 9,5 |
| γ-aminopropyltriéthoxysilane | 0,5 | 0,5 | 0,5 | 0,5 |
| Silicone⁽⁵⁾ | 2,1 | 2,1 | 2,1 | 2,1 |
| Sulfate d'ammonium | - | 5,0 | - | 3,0 |
| **pH** | 1,8⁽⁶⁾ | 1,9⁽⁶⁾ | 1,6⁽⁶⁾ | 5,6⁽⁷⁾ |

| **Propriétés** | | | | |
|---|---|---|---|---|
| **Résistance à la traction (N/g)** | | | | |
| Avant vieillissement | 3,62 | 3,23 | 3,85 | 3,58 |
| Après vieillissement | 2,80 | 3,29 | 3,12 | 3,11 |
| Perte (%) | 22,6 | 0 | 19,0 | 13,1 |
| **Epaisseur (mm)** | | | | |
| Avant traitement | 81 | 83 | 83 | 83 |
| Après traitement | 109 | 117 | 122 | 89 |
| Regonflement (%) | 35,7 | 42,1 | 47,3 | 6,7 |
| **Perte au feu (%)** | 5,2 | 5,2 | 5,2 | 4,7 |

| | | | | |
|---|---|---|---|---|
| ⁽¹⁾ dextrine issue d'amidon de maïs ; masse molaire moyenne en poids : 3510 ; indice de polydispersité IP : 5,2 ; équivalent en dextrose DE : 30 ; commercialisée sous la référence Roclys® C3072S par ROQUETTE FRERES ⁽²⁾ sucre cristal n° 2 600 commercialisé par TEREOS SYRAL ⁽³⁾ sirop de maltitol à 75 % de matières sèches contenant 55 % de maltitol; commercialisé sous la référence Maltilite® 5575 par SYRAL ⁽⁴⁾ commercialisé sous la référence HydroWax® 88 par SASOL ⁽⁵⁾ commercialisé sous la référence DC1581 par DOW CORNING ⁽⁶⁾ extrait sec de la composition d'encollage : 25 % ⁽⁷⁾ extrait sec de la composition d'encollage : 20 % | | | | |

## Revendications

1. Composition d'encollage aqueuse apte à réticuler pour former le liant organique de produits isolants à base de laine minérale, **caractérisée en ce qu'**elle comprend
- au moins un saccharide non réducteur choisi parmi le tréhalose et le saccharose,
- au moins un saccharide hydrogéné choisi parmi l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon et représentant de 40 à 80 % du poids total de(s) saccharide(s) non réducteur(s) et de(s) saccharide(s) hydrogéné(s),
- un acide organique polycarboxyliquequi est l'acide citrique, et
- au moins 1 % et jusqu'à 20 % en poids, rapporté au poids total du ou des sucres non réducteurs, du ou des sucres hydrogénés et de l'acide organique polycarboxylique, d'un catalyseur choisi parmi l'hypophosphite de sodium, le phosphite de sodium et les mélanges de ces composés,
le(s) saccharide(s) non réducteur(s) et le(s) saccharide(s) hydrogéné(s) représente(nt) représentent de 10 à 90 % du poids du mélange constitué par le(s) saccharide(s) non réducteur(s), le(s) saccharide(s) hydrogéné(s) et l'acide organique polycarboxylique.

2. Composition selon la revendication 1, **caractérisée en ce que** le saccharide non réducteur est le saccharose.

3. Composition selon la revendication 1 ou 2, **caractérisée en ce que** le saccharide hydrogéné est un sirop de maltitol.

4. Composition selon l'une des revendications 1 à 3, **caractérisée en ce que** le(s) saccharide(s) hydrogéné(s) représente(nt) 40 à 60 % du poids total de(s) saccharide(s) non réducteur(s) et de(s) saccharide(s) hydrogéné(s).

5. Composition selon l'une des revendications 1 à 4, **caractérisée en ce que** le(s) saccharide(s) non réducteur(s) et le(s) saccharide(s) hydrogéné(s) représente(nt) 30 à 80 %, mieux encore 40 à 65 % et de manière particulièrement avantageuse 45 à 65 % du poids du mélange constitué par le(s) saccharide(s) non réducteur(s), le(s) saccharide(s) hydrogéné(s) et l'acide organique polycarboxylique.

6. Composition selon la revendication 1, **caractérisée en ce que** le catalyseur représente jusqu'à 10 % du poids total du(des) saccharide(s) non réducteur(s), du(des) saccharide(s) hydrogéné(s) et d'acide organique polycarboxylique.

7. Composition selon l'une des revendications 1 à 6, **caractérisée en ce qu'**elle comprend en outre les additifs ci-après dans les proportions suivantes calculées sur la base de 100 parts en poids de saccharide(s) non réducteur(s), de saccharide(s) hydrogéné(s) et d'(des) acide(s) organique(s) polycarboxylique(s) :
- 0 à 2 parts de silane, en particulier un aminosilane ou un epoxysilane,
- 0 à 40 parts d'huile, de préférence 0 à 30 parts, notamment 4 à 24 parts,
- 0 à 30 parts d'urée, de préférence 0 à 20 parts, et avantageusement 0 part,
- 0 à 5 parts d'un silicone,
- 0 à 20 parts d'un polyol différent des saccharides précités,
- 0 à 15 parts de sulfate métallique ou d'ammonium, de préférence 0 à 10 parts, et avantageusement 0 à 5 parts,
- 0 à 30 parts d'un « extendeur » choisi parmi les dérivés de la lignine tel que le lignosulfonate d'ammonium ou le lignosulfonate de sodium, et les protéines animales ou végétales.

8. Utilisation d'une composition aqueuse selon l'une quelconque des revendications précédentes pour la fabrication de produits d'isolation à base de laine minérale, dans laquelle la composition d'encollage est projetée sur des fibres minérales à la sortie d'un dispositif centrifuge et avant leur collecte sur un organe récepteur sous la forme d'une nappe de fibres qui est ensuite traitée à une température supérieure ou égale à 140 °C permettant la réticulation de l'encollage et la formation d'un liant infusible.

## Patentansprüche

1. Vernetzungsfähige wässrige Bindemittelzusammensetzung zur Bildung des organischen Bindemittels von Isolierprodukten auf der Basis von Mineralwolle, **dadurch gekennzeichnet, dass** sie umfasst
- mindestens ein nichtreduzierendes Saccharid, ausgewählt aus der Trehalose und der Saccharose,
- mindestens ein hydriertes Saccharid, ausgewählt aus dem Erythritol, dem Arabitol, dem Xylitol, dem Sorbitol, dem Mannitol, dem Iditol, dem Maltitol, dem Isomaltitol, dem Lactitol, dem Cellobitol, dem Palatinitol, dem Maltotritol und den Hydrierungsprodukten von Stärkehydrolysaten, die 40 bis 80 % des Gesamtgewichts des/der nichtreduzierenden Saccharid/s/e und des/der hydrierten Saccharid/s/e darstellen,
- eine organische Polycarbonsäure, die Citronensäure ist,
- mindestens 1 und bis 20 Gew.-%, bezogen auf das Gesamtgewicht des oder der nichtreduzierenden Zucker, des oder der hydrierten Zucker und der organischen Polycarbonsäure eines Katalysators, ausgewählt aus dem Natriumhypophosphit, dem Natriumphosphit und den Gemischen dieser Verbindungen,
wobei das/die nichtreduzierende/n Saccharid/e und das/die hydrierte/n Saccharid/e 10 bis 90 % des Gewichts des Gemischs darstellen, bestehend aus dem/den nichtreduzierenden Saccharid/en, dem/den hydrierten Saccharid/en und der organischen Polycarbonsäure.

2. Zusammensetzung nach Anspruch 1, **dadurch gekennzeichnet, dass** das nicht reduzierende Saccharid die Saccharose ist.

3. Zusammensetzung nach Anspruch 1 oder 2, **dadurch gekennzeichnet, dass** das hydrierte Saccharid ein Maltitolsirup ist.

4. Zusammensetzung nach einem der Ansprüche 1 bis 3, **dadurch gekennzeichnet, dass** das/die hydrierte/n Saccharid/e 40 bis 60 % des Gesamtgewichts des/der nichtreduzierenden Saccharid/s/e und des/der hydrierten Saccharid/s/e darstellen.

5. Zusammensetzung nach einem der Ansprüche 1 bis 4, **dadurch gekennzeichnet, dass** das/die nichtreduzierende/n Saccharid/e und das/die hydrierte/n Saccharid/e 30 bis 80 %, noch besser 40 bis 65 % und in besonders vorteilhafter Weise 45 bis 65 % des Gewichts des Gemischs darstellen, bestehend aus

6. Zusammensetzung nach Anspruch 1, **dadurch gekennzeichnet, dass** der Katalysator bis 10 % des Gesamtgewichts des/der nichtreduzierenden Saccharid/s/e, des/der hydrierten Saccharid/s/e und der organischen Polycarbonsäure darstellt.

7. Zusammensetzung nach einem der Ansprüche 1 bis 6, **dadurch gekennzeichnet, dass** sie ferner die nachstehenden Additive in den folgenden Anteilen umfasst, berechnet auf der Basis von 100 Gewichtsteilen nichtreduzierenden/er Saccharid/s/e, hydrierten/er Saccharid/s/e und organischer/n Polycarbonsäure/n:
- 0 bis 2 Teile Silan, insbesondere ein Aminosilan oder ein Epoxysilan,
- 0 bis 40 Teile Öl, vorzugsweise 0 bis 30 Teile, insbesondere 4 bis 24 Teile,
- 0 bis 30 Teile Harnstoff, vorzugsweise 0 bis 20 Teile, und in vorteilhafter Weise 0 Teile,
- 0 bis 5 Teile eines Silikons,
- 0 bis 20 Teile eines Polyols, das sich von den vorgenannten Sacchariden unterscheidet,
- 0 bis 15 Teile Metall- oder Ammoniumsulfat, vorzugsweise 0 bis 10 Teile, und in vorteilhafter Weise 0 bis 5 Teile,
- 0 bis 30 Teile eines "Streckmittels", ausgewählt aus den Derivaten des Lignins wie dem Ammonium-Lignosulfonat oder dem Natrium-Lignosulfonat und den tierischen oder pflanzlichen Proteinen.

8. Verwendung einer wässrigen Zusammensetzung nach einem der vorangehenden Ansprüche für die Herstellung von Isolierprodukten auf der Basis von Mineralwolle, wobei die Bindemittelzusammensetzung auf die Mineralfasern am Ausgang einer Zentrifugalvorrichtung und vor ihrem Sammeln auf einem Empfangsorgan in Form einer Fasermatte projiziert wird, die dann bei einer Temperatur von über oder gleich 140 °C behandelt wird, was die Vernetzung des Bindemittels und die Ausbildung eines unschmelzbaren Binders gestattet.

## Claims

1. A sizing composition capable of crosslinking to form an organic binder of insulating products based on mineral wool **characterized in that** it comprises
- at least one non-reducing saccharide selected from trehalose and sucrose,
- at least one hydrogenated saccharide selected from erythritol, arabitol, xylitol, sorbitol, mannitol, iditol, maltitol, isomaltitol, lactitol, cellobitol, palatinitol, maltotritol and the hydrogenation products of starch hydrolysates and representing from 40 % to 80 % of the total weight of non-reducing saccharide(s) and hydrogenated saccharide(s), and
- a polycarboxylic organic acid which is citric acid, and
- at least 1 % and up to 20 % by weight of a catalyst selected from sodium hypophosphite, sodium phosphite and mixtures of these compounds, of the total weight of the non-reducing saccharide(s), of the hydrogenated saccharide(s) and of polycarboxylic organic acid,
the non-reducing saccharide(s) and the hydrogenated saccharide(s) represent from 10 % to 90 % of the weight of the mixture consisting of the non-reducing saccharide(s), the hydrogenated saccharide(s) and the polycarboxylic organic acid.

2. The composition as claimed in claim 1, **characterized in that** the non-reducing saccharide is sucrose.

3. The composition as claimed in claim 1 or 2, **characterized in that** the hydrogenated saccharide is a maltitol syrup.

4. The composition as claimed in one of claims 1 to 3, **characterized in that** the hydrogenated saccharide(s) represent(s) from 40 % to 60 % of the total weight of non-reducing saccharide(s) and hydrogenated saccharide(s).

5. The composition as claimed in one of claims 1 to 4, **characterized in that** the non-reducing saccharide(s) and the hydrogenated saccharide(s) represent from 30 % to 80 % of the weight of the mixture consisting of the non-reducing saccharide(s), the hydrogenated saccharide(s) and the polycarboxylic organic acid, even better still from 40 % to 65 % and particularly advantageously from 45 % to 65 %.

6. The composition as claimed in claim 1, **characterized in that** the catalyst represents up to 10 % of the total weight of the non-reducing saccharide(s), of the hydrogenated saccharide(s) and of polycarboxylic organic acid.

7. The composition as claimed in one of claims 1 to 6, **characterized in that** it also comprises the additives below in the following proportions calculated on the basis of 100 parts by weight of non-reducing saccharide(s), of hydrogenated saccharide(s) and of polycarboxylic organic acid(s):
- 0 to 2 parts of silane, in particular an aminosilane or an epoxy silane,
- 0 to 40 parts of oil, preferably 0 to 30 parts, in particular 4 to 24 parts,
- 0 to 30 parts of urea, preferably 0 to 20 parts, and advantageously 0 part,
- 0 to 5 parts of a silicone,
- 0 to 20 parts of a polyol other than the abovementioned saccharides,
- 0 to 15 parts of metal sulfate or ammonium sulfate, preferably 0 to 10 parts, and advantageously 0 to 5 parts,
- 0 to 30 parts of an "extender" chosen from lignin derivatives, such as ammonium lignosulfonate or sodium lignosulfonate, and animal or plant proteins.

8. Use of an aqueous composition as claimed in one of preceding claims for the manufacture of insulating products based on mineral wool, wherein the sizing composition is sprayed onto the mineral fibers at the outlet of a centrifugal device and before they are collected on a receiving member in the form of a web of fibers which is subsequently treated at a temperature greater than or equal to 140 °C, allowing the crosslinking of the size and the formation of an infusible binder.
